# EUROPEAN PATENT SPECIFICATION

(11) **EP 2 859 800 B1**
(45) Date of publication and mention of the grant of the patent: **13.11.2019**
(21) Application number: 14176839.0
(22) Date of filing: 13.07.2014
(51) Int. Cl.: A23L 3/00, A23L 3/18

(54) **Method for sterilizing a product**
Methode zum Sterilisieren eines Produktes
Procédé pour stériliser un produit

(30) Priority: 11.10.2013 US 201361889564 P
(43) Date of publication of application: 15.04.2015
(73) Proprietor: Linde Aktiengesellschaft, 80331 München (DE)
(72) Inventor: HANDLEY, Simon James, Old Hutton, Kendal, Cumbria LA8 0NS (GB)
(74) Representative: Gellner, Bernd

(56) References cited:
- WO-A1-02/051450
- WO-A1-2007/039284
- WO-A1-2013/169502
- DE-T2- 60 223 909
- FR-A1- 2 940 682
- US-A- 4 088 444
- US-A- 4 479 776
- US-A- 6 039 991
- US-A1- 2006 019 003

## Description

### Technical field of the present invention

The present invention relates to a method which sterilizes or kills microbial life on products, for example on food products.

### Technological background of the present invention

Sterilization refers to a process that removes or kills microbial life. Microbial life can be fungi, bacteria, molds and viruses, and such can be present on a surface, or in a fluid or a compound.

Sterilization can include treatments by heat, chemical, irradiation or high pressure. Heat or shock treatment of bacteria has found wide use because such treatment causes well-defined damage to cells; that is, the unfolding or denaturization of proteins of the cells.

Cold shock treatment does not necessarily cause such well-defined cellular damage, but such treatment inhibits cell growth by severely restricting the general protein synthesis of the cell. Unfortunately, the cells can become accustom to the low temperature and after a period of time begin regrowth.

Within the dairy industry, cold shock has been used for many years and the process equipment, following use, is cleaned. Usually cold water (with detergent) is used to rinse the equipment, followed by hot water with sterilizer, followed immediately by either chilled water or very cold water. The cold shock assists in the destruction of many microorganisms and the removal of fat debris.

Within the poultry industry for example, campylobacter is present on fifty percent (50%) of the birds. Campylobacter bacteria causes food poisoning, although campylobacter is an easy bacterium to destroy.

DE 602 23 909 T2 (= EP 1 370 145 B1) discloses a method for microbiological decontamination of powdery products, grains or the like. It consists in subjecting the powdery product to at least one first thermal treatment, i. e. a heat treatment, applying a flow of hot gas to the powdery product at a temperature between 200°C and 600°C for a duration of less than thirty seconds, and, immediately after this first thermal treatment, subjecting said product to a second thermal treatment, i. e. a cold treatment, consisting in applying a flow of cold gas to the powdery product at a temperature less than -80°C for a duration of less than thirty seconds, in order to partially or totally destroy the yeasts, mould, bacteria or the like, initially present on the powdery product, while still conserving its organoleptic properties.

DE 602 23 909 T2 (= EP 1 370 145 B1) also reveals an apparatus for decontaminating powdery products, grains or the like, comprising at least one enclosed area and means for heating and/or cooling the air contained in said enclosed area. In this manner, the heat treatment applied at first allows for destroying the yeasts, mould, bacteria or the like, while avoiding to burn the product, whereas the second thermal treatment, i. e. the cold treatment, applied afterwards allows for stopping a further propagation of the heat in the product being applied to the product in the first heat treatment, thus preventing the product from being calcined.

### Disclosure of the present invention: object, solution, advantages

Starting from the disadvantages and shortcomings as described above and taking the prior art as discussed into account, an object of the present invention is to overcome the problems that earlier methods have experienced, in particular to provide for a method by which a product, for example a food product, is sterilized in an efficient and reliable way.

This object is accomplished by a method comprising the features of claim 1. Advantageous embodiments and expedient improvements of the present invention are disclosed in the dependent claims.

The present invention basically provides for an air sterilizer method for microorganisms, more particularly to a method to sterilize a product, in particular a food product or an animal carcass, for example a poultry carcass, by thermally shocking the product with a cooled, in particular super cooled, air flow followed by a hot air flow to the product.

By way of example, the method according to the present invention may be implemented by an apparatus for sterilizing a product including a heat exchanger system having at least one first delivery apparatus for delivering a cool, in particular super cooled, air flow to the product and at least one second delivery apparatus for delivering a heated or hot air flow to the product downstream from the first delivery apparatus for providing thermal shock to microorganisms on the product; and a conveyor for moving the product from a first position near the first delivery apparatus to a second position near the second delivery apparatus.

According to an embodiment of said apparatus, the air sterilizer uses liquid nitrogen (LIN) to cool air by means of the heat exchanger system, in particular of the first delivery apparatus, for example of the cool air heat exchanger; the super cooled air will then be passed over a surface, flesh or product for predetermined time to sterilize same.

This will be followed by heated or hot air provided to the same surface, flesh or product to cause thermal shock to any microorganisms present thereon, leading to their destruction. According to an embodiment of said apparatus, the air sterilizer uses hot water to heat air by means of the heat exchanger system, in particular of the second delivery apparatus, for example of the heated or hot air heat exchanger.

According to an embodiment of said apparatus, the first delivery apparatus and the second delivery apparatus are disposed at a similar side of the conveyor or at opposed sides of the conveyor.

Depending on the implementation of the method according to the present invention, the conveyor may for example be a conveyor belt, in particular a gas permeable conveyor belt, or a carrier rail, in particular of the open mesh variety.

According to an embodiment of said apparatus, a return plate, being in registration with the first delivery apparatus, may be positioned such that the conveyor, in particular the carrier rail, travels between the first delivery apparatus and the return plate.

The return plate may be constructed and arranged as a curved longitudinal member to allow any cool, in particular super cooled, air to return onto the non-heat exchanger side of the product, i. e. to redirect, in particular to deflect and to return, any cool, in particular super cooled, air as surplus to re-contact an opposite side of the product and provide cooling to subsequent product that is to be exposed to the first delivery apparatus.

According to an embodiment of said apparatus, a return plate, being in registration with the second delivery apparatus, may be positioned such that the conveyor, in particular the carrier rail, travels between the second delivery apparatus and the return plate.

The return plate may be constructed and arranged as a curved longitudinal member to allow any heated or hot air to reach the outer side of the product, i. e. to redirect, in particular to deflect and to return, any heated or hot air as surplus to re-contact an opposite side of the product and provide heating to subsequent product that is to be exposed to the second delivery apparatus.

According to an embodiment of said apparatus, a filter, in particular a high-efficiency particulate air (HEPA) filter, is provided to receive used cool or hot air (flow) in which pathogens and particulate matter are present.

According to an embodiment of said apparatus, an extractor is in communication with the filter such that pathogens and any particulate matter can be removed from the filter, in particular for subsequent disposal.

According to the present invention, the method for sterilizing a product includes providing a first air flow to the product to reduce a temperature of the product, said first air flow being at a temperature range of -100°C to -80°C; and providing a second air flow to the product after the first air flow to heat and thermally shock the product to sterilize any microorganisms on the product, said second air flow being at a temperature range of 50°C to 100°C.

According to a favoured embodiment of the present invention, the first air flow and the second air flow are provided at a similar side of the product or at opposed sides of the product.

By filtering an atmosphere resulting from the first air flow and from the second air flow, pathogens and particulate matter are removed from said atmosphere.

The method according to the present invention uses a heat exchanger to provide (super) cooled air and hot air. Liquid nitrogen (LIN) for cooling may be the refrigerant passing through the coil of said heat exchanger. The (super) cooled air provided to the product is free of nitrogen (N₂) gas and therefore, there is no issue of asphyxiation.

Cooled or super cooled air is a medium to provide reliable surface area contact and can penetrate maximum surface area for a predetermined amount of time.

The air delivered is not at high pressure and thus, cross-contamination by airborne particulate is substantially reduced if not eliminated.

The apparatus and the method according to the present invention produces a large volume of (super) cooled air and therefore, can easily be adapted to a larger volume sterilization of product.

The method according to the present invention can be adapted for product sterilization of, in particular for destroying campylobacter on, for example, whole chickens or other types of poultry, and can be used in food process areas, hospitals, hotels, restaurants, dairy industries, and public areas.

The method according to the present invention does not use water (--> no water waste), ozone (--> no danger to health), direct liquid nitrogen (--> no danger of asphyxiation) or chemicals (regulatory), and is environmentally friendly.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to embodiments by way of non-limiting example and to the appended drawing figures taken in conjunction with the following description of the embodiments, of which:
- FIG. 1: shows a schematic of a first embodiment of an air sterilizer apparatus, said embodiment working according to the method of the present invention;
- FIG. 2: shows a schematic of a component, namely the first delivery apparatus, in particular the cool air heat exchanger, of the embodiment of FIG. 1;
- FIG. 3: shows a schematic of a component, namely the second delivery apparatus, in particular the hot air heat exchanger, of the embodiment of FIG. 1;
- FIG. 4: shows a first part of a schematic of a second embodiment of an air sterilizer apparatus, said embodiment working according to the method of the present invention;
- FIG. 5: shows a second part of a schematic of the embodiment of FIG. 4; and
- FIG. 6: shows a schematic of a third embodiment of an air sterilizer apparatus, said embodiment working according to the method of the present invention.

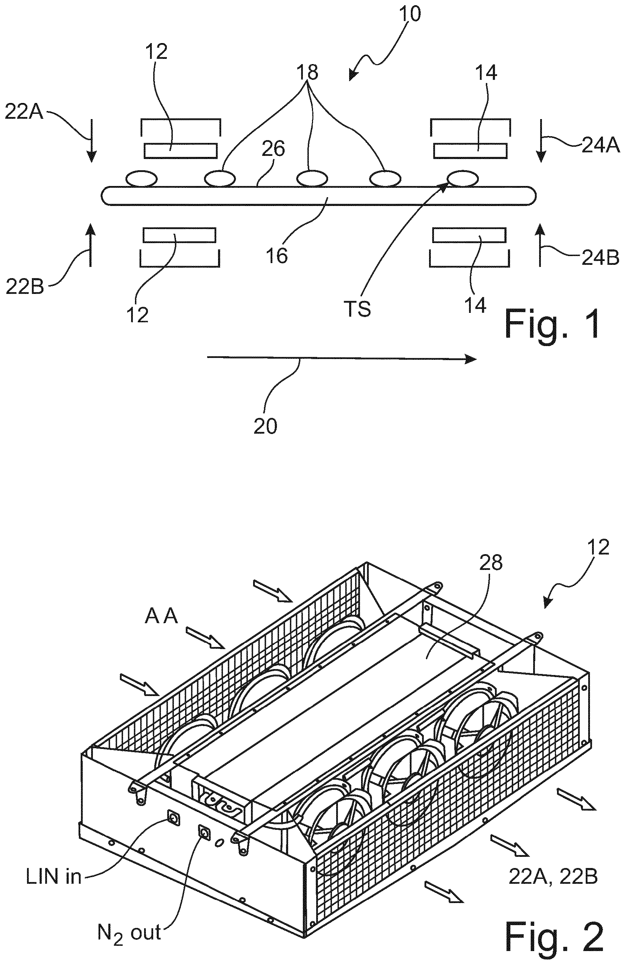

In the appended drawing figures, like equipment is labelled with the same reference numerals throughout the description of FIG. 1 to FIG. 6.

### Detailed description of the drawings; best way of embodying the present invention

Before describing the present embodiments in detail, it is to be understood that the embodiments are not limited in their application to the details of construction and arrangement of parts illustrated in the accompanying drawings, since the present invention is capable of being practiced or carried out in various ways. Also, it is to be understood that the phraseology or terminology employed herein is for the purpose of description and not of limitation.

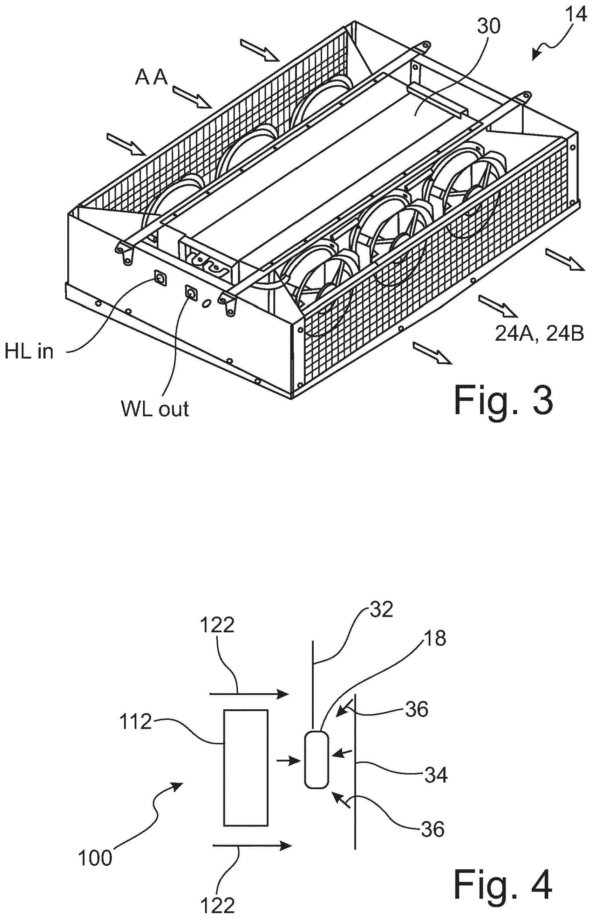

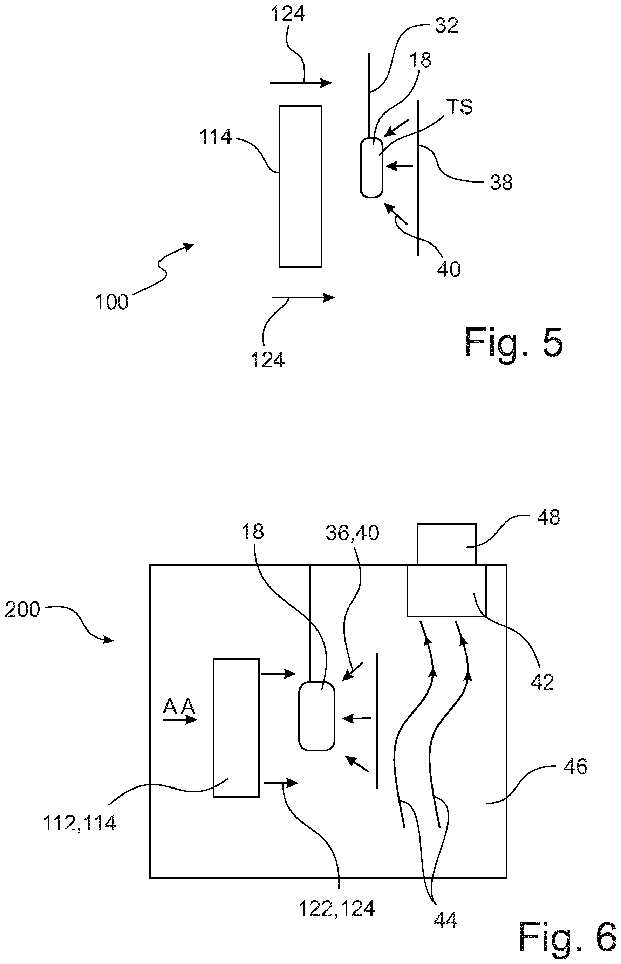

In order to avoid unnecessary repetitions and unless otherwise stated, the above-mentioned as well as the below-mentioned explanations regarding the features, characteristics and advantages of the respective embodiments relate
- to the first embodiment 10 according to FIG. 1 to FIG. 3 as well as
- to the second embodiment 100 according to FIG. 4 and FIG. 5 as well as
- to the third embodiment 200 according to FIG. 6.

Referring to FIG. 1 to FIG. 3, the apparatus of the present embodiments is shown generally at 10.

The apparatus 10 includes at least one cool air heat exchanger 12 and at least one hot air heat exchanger 14. As shown in FIG. 1, there may be a plurality of cool air heat exchangers 12 and hot air heat exchangers 14 arranged proximate to a conveyor or transfer belt 16 for moving products 18 in a direction shown for example by arrow 20.

The heat exchangers 12, 14 are arranged in relative close proximity to the belt 16, and where a plurality of heat exchangers 12, 14 are used, the belt 16 is disposed between respective pairs of the cool air heat exchangers 12 and the hot air heat exchangers 14.

As shown in FIG. 1, the hot air heat exchangers 14 are arranged downstream of the cool air heat exchangers 12.

Arrow 22A refers to a cooled, in particular super cooled, air flow provided downward to an upper surface 26 of the belt 16, while arrow 22B refers to a cooled, in particular super cooled, air flow directed from beneath the belt 16. Arrow 24A refers to a heated or hot air flow provided downward to an upper surface 26 of the belt 16, while arrow 24B refers to a heated or hot air flow directed from beneath the belt 16.

The conveyor belt 16 can be gas permeable or of the open mesh variety, although other types of conveyor belts can be used.

Referring to FIG. 2, the cool air heat exchanger 12 is shown in more detail.

Liquid nitrogen (LIN) is introduced into a cooling coil 28 of the cool air heat exchanger 12. Ambient air AA introduced into the heat exchanger 12 passes over the cooling coil 28, wherein the LIN vaporizes and is exhausted as a nitrogen (N₂) gas.

Piping (not shown) provides the LIN to the coiling coil 28, and exhausts the N₂ gas from the coil 28. The ambient air AA of the plant which is passed over the cooling coil 28 is exhausted from the heat exchanger 12 as super cooled air to be directed first onto the product 18 being transferred by the belt 16.

Referring to FIG. 3, the hot air heat exchanger 14 is shown in more detail.

Hot liquid, such as heated water, is introduced into a heating coil 30 of the hot air heat exchanger 14. Ambient air AA introduced into the heat exchanger 14 passes over the heating coil 30, wherein the ambient water becomes heated and is exhausted as shown.

Piping (not shown) provides the hot liquid HW to the heating coil 30, and discharges the warmed liquid WW from the coil 30. The ambient air AA of the plant which is passed over the heating coil 30 is exhausted from the heat exchanger 14 as hot air to be directed onto the product 18 being transferred by the belt 16 from a station at the heat exchanger 12.

Still referring to FIG. 3, the product 18 is transferred by the belt 16 to be in close proximity to the heat exchanger 14 such that the thermal shock TS is provided to the product 18 and any microorganisms thereon; in particular, campylobacter is destroyed by said thermal shock TS. This is accomplished by the hot air from the heating coil 30 contacting the product 18 which had just previously been cold shocked.

In another embodiment shown generally as 100 in FIG. 4 and in FIG. 5, the cool air heat exchanger 112 and the hot air heat exchanger 114, respectively, are mounted to the side of a carrier rail 32 (instead of a conveyor belt 16) which is transporting the product 18, such as for example a poultry carcass, in close proximity to the heat exchangers 112, 114.

Referring to FIG. 4, a return plate 34 is positioned such that the carrier rail 32 travels between the cool air heat exchanger 112 and the plate 34. The plate 34 may be constructed and arranged as a curved longitudinal member to deflect and return any super cooled air 122 as surplus to re-contact an opposite side of the product 18 and provide cooling to subsequent product that is to be exposed to the cool air heat exchanger 112. The returned surplus cooled air flow is shown by arrows 36.

In FIG. 5, the hot air heat exchanger 114 disposed downstream of the cold air heat exchanger 112 is mounted to the side of a carrier rail 32 which is transporting the product 18, such as for example a poultry carcass, in close proximity to the hot air heat exchanger 114.

Referring to FIG. 5, a return plate 38 is positioned such that the carrier rail 32 travels between the hot air heat exchanger 114 and the plate 38. The plate 38 may be constructed and arranged as a curved longitudinal member to deflect and return any heated air 124 as surplus to re-contact an opposite side of the product 18 and provide heating to subsequent product that is to be exposed to the hot air heat exchanger 114. The returned surplus heated air flow is shown by arrows 40.

FIG. 6 discloses still another embodiment of the apparatus shown generally at 200.

In the embodiment of FIG. 6, such embodiment is applicable to either of the heat exchangers 112, 114 and their air flows 122, 124 and return air flows 36, 40, respectively. That is, FIG. 6 represents an embodiment which can be used with each of the heat exchangers 112, 114.

A high-efficiency particulate air (HEPA) filter 42 is provided to receive used air or air flow 44 in which pathogens and particulate matter are present. As shown, the air 44 is that which is present in an area of a plant environment or a room 46 where the apparatus 200 is being used.

An extractor 48 is in communication with the filter 42 such that pathogens and any particulate matter can be removed from the filter 42 for subsequent disposal.

The extractor 48 and the filter 42 may also be used
- with the first embodiment shown at FIG. 1 and/or
- with the second embodiment shown at FIG. 2 and FIG. 3.

The cool air 22A, 22B, 122 from the heat exchanger 12, 112, respectively, may be super-cooled air provided at a temperature in the range of -100°C to -80°C, while the hot air 24A, 24B, 124 provided from the heat exchanger 14, 114, respectively, may be at a temperature in the range of 50°C to 100°C.

A process logic control (PLC) and/or a human machine interface (HMI) may be operationally connected to the apparatus 10, 100, 200 and may be encoded with the type of product 18, production rate, microbial type, etc. in order to control sterilization by the present apparatus 10, 100, 200.

The present embodiments 10, 100, 200 can be used for other than the food industry, such as for sterilizing equipment such as hire equipment of phones, cutlery, plates, utensils and other items which may be used for public events.

It will be understood that the embodiments described herein are merely exemplary. Further, all embodiments disclosed are not necessarily in the alternative, as various embodiments may be combined to provide the desired result.

### List of reference numerals

- 10: apparatus (= first embodiment; cf. FIG. 1 to FIG. 3)
- 100: apparatus (= second embodiment; cf. FIG. 4 and FIG. 5)
- 200: apparatus (= third embodiment; cf. FIG. 6)
- 12: first delivery apparatus, in particular cool air heat exchanger, for example super cooled air heat exchanger
- 112: first delivery apparatus, in particular cool air heat exchanger, for example super cooled air heat exchanger
- 14: second delivery apparatus, in particular heated or hot air heat exchanger
- 114: second delivery apparatus, in particular heated or hot air heat exchanger
- 16: conveyor, in particular conveyor belt or transfer belt
- 18: product, in particular food product or animal carcass, for example poultry carcass
- 20: moving direction of product 18
- 22A: cool, in particular super cooled, air (flow) provided downward to upper surface 26 of conveyor 16
- 22B: cool, in particular super cooled, air (flow) directed from beneath conveyor 16
- 122: cool, in particular super cooled, air (flow)
- 24A: heated or hot air (flow) provided downward to upper surface 26 of conveyor 16
- 24B: heated or hot air (flow) directed from beneath conveyor 16
- 124: heated or hot air (flow)
- 26: upper surface of conveyor 16
- 28: coil, in particular cooling coil, of first delivery apparatus 12
- 30: coil, in particular heating coil, of second delivery apparatus 14
- 32: conveyor, in particular carrier rail
- 34: curved plate or return plate for cooled air (flow) 122
- 36: returned surplus of cooled air (flow) 122
- 38: curved plate or return plate for heated or hot air (flow) 124
- 40: returned surplus of heated or hot air (flow) 124
- 42: filter, in particular high-efficiency particulate air (HEPA) filter, for cool air (flow) 22A, 22B, 122 and for hot air (flow) 24A, 24B, 124
- 44: used air (flow)
- 46: plant environment or room
- 48: extractor in communication with filter 42
- AA: ambient air
- HL: hot liquid
- TS: thermal shock
- WL: warm(ed) liquid

## Claims

1. A method for sterilizing a product (18), comprising:
- providing a first air flow (22A, 22B; 122) to the product (18) to reduce a temperature of the product (18), said first air flow (22A, 22B; 122) being at a temperature range of -100°C to -80°C, and
- providing a second air flow (24A, 24B; 124) to the product (18) after the first air flow (22A, 22B; 122) to heat and thermally shock the product (18) to sterilize any microorganisms on the product (18), said second air flow (24A, 24B; 124) being at a temperature range of 50°C to 100°C, **characterized by** filtering (42) an atmosphere resulting from the first air flow (22A, 22B; 122) and from the second air flow (24A, 24B; 124) for removing pathogens and particulate matter from said atmosphere.

2. The method according to claim 1, wherein the first air flow (22A, 22B; 122) and the second air flow (24A, 24B; 124) are provided
- at a similar side of the product (18) or
- at opposed sides of the product (18).

3. The method according to claim 1 or 2, further comprising redirecting at least one of the first air flow (22A, 22B; 122) and of the second air flow (24A, 24B; 124) to re-contact the product (18).

4. The method according to at least one of claims 1 to 3, further comprising conveying (16; 32) the product (18) to the first air flow (22A, 22B; 122) and to the second air flow (24A, 24B; 124).

## Patentansprüche

1. Verfahren zum Sterilisieren eines Produkts (18), umfassend:
- Zuführen einer ersten Luftströmung (22A, 22B; 122) zum Produkt (18) zur Reduzierung einer Temperatur des Produkts (18), wobei die erste Luftströmung (22A, 22B; 122) eine Temperatur im Bereich von -100°C bis - 80°C aufweist, und
- Zuführen einer zweiten Luftströmung (24A, 24B; 124) zum Produkt (18) nach der ersten Luftströmung (22A, 22B; 122) zum Erwärmen und thermischen Schocken des Produkts (18) zur Sterilisation von eventuellen Mikroorganismen auf dem Produkt (18), wobei die zweite Luftströmung (24A, 24B; 124) eine Temperatur im Bereich von 50°C bis 100°C aufweist, **gekennzeichnet durch** Filtern (42) einer aus der ersten Luftströmung (22A, 22B; 122) und aus der zweiten Luftströmung (24A, 24B; 124) resultierenden Atmosphäre zur Entfernung von Erregern und Schwebeteilchen aus der Atmosphäre.

2. Verfahren nach Anspruch 1, wobei die erste Luftströmung (22A, 22B; 122) und die zweite Luftströmung (24A, 24B; 124)
- auf einer ähnlichen Seite des Produkts (18) oder
- auf gegenüberliegenden Seiten des Produkts (18) vorgesehen sind.

3. Verfahren nach Anspruch 1 oder 2, ferner umfassend das Umleiten zumindest einer der ersten Luftströmung (22A, 22B; 122) und der zweiten Luftströmung (24A, 24B; 124) für erneuten Kontakt mit dem Produkt (18).

4. Verfahren nach zumindest einem der Ansprüche 1 bis 3, ferner umfassend das Transportieren (16; 32) des Produkts (18) zur ersten Luftströmung (22A, 22B; 122) und zur zweiten Luftströmung (24A, 24B; 124).

## Revendications

1. Procédé pour stériliser un produit (18), comprenant
- fournir un premier flux d'air (22A, 22B ; 122) au produit (18) pour réduire une température du produit (18), ledit premier flux d'air (22A, 22B ; 122) étant dans une plage de températures de -100° C à -80° C, et
- fournir un deuxième flux d'air (24A, 24B ; 124) au produit (18) après le premier flux d'air (22A, 22B ; 122) afin de chauffer et soumettre à un choc thermique le produit (18) pour stériliser tout micro-organisme sur le produit (18), ledit deuxième flux d'air (24A, 24B ; 124) étant dans une plage de températures de 50° C à 100° C, **caractérisé par** le filtrage (42) d'une atmosphère résultant du premier flux d'air (22A, 22B ; 122) et du deuxième flux d'air (24A, 24B ; 124) pour éliminer les pathogènes et les matières particulaires de ladite atmosphère.

2. Procédé selon la revendication 1, dans lequel le premier flux d'air (22A, 22B ; 122) et le deuxième flux d'air (24A, 24B ; 124) sont fournis
- au niveau d'un même côté du produit (18) ou
- au niveau de côtés opposés du produit (18).

3. Procédé selon la revendication 1 ou 2, comprenant en outre le fait de rediriger au moins l'un parmi le premier flux d'air (22A, 22B ; 122) et le deuxième flux d'air (24A, 24B ; 124) de manière à ce qu'ils reviennent en contact avec le produit (18) .

4. Procédé selon au moins l'une des revendications 1 à 3, comprenant en outre le transport (16 ; 32) du produit (18) vers le premier flux d'air (22A, 22B ; 122) et vers le deuxième flux d'air (24A, 24B ; 124) .
